# EUROPEAN PATENT SPECIFICATION

(11) **EP 2 530 606 B1**
(45) Date of publication and mention of the grant of the patent: **24.01.2018**
(21) Application number: 11168704.2
(22) Date of filing: 03.06.2011
(51) Int. Cl.: G06F 17/30

(54) **Image viewing system for aerial images**
Bildansichtssystem für Luftbilder
Système d'affichage d'images pour images aériennes

(43) Date of publication of application: 05.12.2012
(73) Proprietor: Harman Becker Automotive Systems GmbH, 76307 Karlsbad (DE)
(72) Inventor: Ivanov, Vladimir, 81375 München (DE); Feldbauer, Thomas, 93047 Regensburg (DE); Fischer, Martin, 80805 München (DE); Spindler, CC., 76135 Karlsruhe (DE); Schütz, Simon, 70195 Stuttgart (DE)
(74) Representative: Bertsch, Florian Oliver

(56) References cited:
- Anonymous: "Oracle Spatial GeoRaster Developer's Guide 11g release (11.1) B28398-03", , 1 August 2008 (2008-08-01), XP55007197, Retrieved from the Internet: URL:http://www.oracle.com/pls/db111/to_pdf ?pathname=appdev.111/b28398.pdf [retrieved on 2011-09-15]
- Anonymous: "Oracle Fusion Middleware User's Guide for Oracle MapViewer 11g Release 1 (11.1.1) E10145-02", , 1 June 2009 (2009-06-01), XP55007218, Retrieved from the Internet: URL:http://www.art2dec.com/documentation/d ocs/fmw11g1111documentation/web.1111/e1014 5.pdf [retrieved on 2011-09-15]

## Description

### Technical Field

This invention relates to an image viewing system for generating a display image of an aerial image, to an image generating unit generating the aerial image and to a method for generating aerial images.

### Background

Recently, the use of aerial images showing an aerial view of a certain geographical area has become popular. The aerial images can be satellite images or images taken from a plane flying across the geographical area. The geographical area is divided into tiles, an aerial image covering a complete tile and providing an aerial view of the complete tile.

These aerial images are currently provided by different images supplying entities. For an end user the visualization of aerial images is especially beneficial for viewing urban agglomerations. Sometimes a city or urban agglomeration is located next to a border of a tile so that it may happen that an aerial image exist for one tile, but no aerial image exists for the neighboring tile which still covers the same urban agglomeration. As a consequence, the aerial image abruptly stops at the border of the tile.

Furthermore, aerial images are supplied by different images suppliers and the number of cities or urban agglomerations for which aerial images are provided is increasing. With the presently existing system of aerial images separated into tiles it can be difficult to update a database containing different aerial images when aerial images from another supplier or when aerial images from a new geographical area such as a new urban agglomeration can be provided.

"Oracle Spatial GeoRaster Developer's Guide 11g Release 1 (11.1) B28398-03" discloses a database with raster image and gridded data and associated metadata.

### Summary

Accordingly, a need exists to provide an effective representation of aerial images when two or more urban agglomerations located in one tile should be displayed. Furthermore, a need exists to be able to more flexibly update a database with the aerial images.

This need is met by the features of the independent claims. In the dependent claims preferred embodiments of the invention are described.

An image viewing system of the invention comprises a database, the database containing a plurality of aerial images of a geographical region that is divided into tiles. An aerial image covers the geographical area of a tile and when an aerial image shows an urban agglomeration that is delimited from a surrounding geographical area by its outer boundary, the aerial image is configured such that an aerial view of the urban agglomeration shown in the aerial image is limited to the urban agglomeration wherein no aerial view is shown of the geographical area outside the outer boundary. Furthermore, an image viewer is provided generating a display image of the aerial image.

By limiting the aerial view to an area inside the outer boundary of an urban agglomeration it can be first of all assured that the whole urban agglomeration is visible in the aerial image. Furthermore, when a tile covers a geographical area for which aerial images for more than one urban agglomeration exist, different aerial images are used, as each aerial image is limited to the aerial view of only one urban agglomeration. It is possible that an aerial image shows urban views of two or three urban agglomerations. However, when aerial images are provided for another urban agglomeration located in the same tile it is possible to additionally use an aerial image only showing an aerial view of this newly added urban agglomeration alone or in combination with the other aerial images.

The aerial image may be a digital aerial image in which pixels of the aerial image each contain at least one color value and a transparency value varying from a value corresponding to full transparency to a value corresponding to no transparency. The aerial image is configured in such a way that the transparency value of pixels outside the urban agglomeration is set to full transparency. When the aerial images are digital images which in addition to the color of each pixel store the transparency, it is possible to superimpose different aerial images covering the same tile as one aerial image shows the aerial view of one urban agglomeration and the other aerial image shows the aerial view of the other urban agglomeration. The transparency value also known under the name of alpha channel is a technique in which for each pixel additional data is provided describing the alpha channel with a value varying between a lower limit meaning that the pixel does not have any coverage information and is transparent, i.e. that there is no color contribution to that pixel. At the other end of the value range a second limit exists corresponding to the fact that the pixel is opaque meaning that the pixel is not transparent at all and shows the color of the object located at the corresponding location of the pixel.

The pixel values outside the outer boundary are set to full transparency and the pixel values inside the urban agglomeration are set to no transparency. When such a display image is displayed on the image viewer, the aerial view of the urban agglomeration is shown inside the outer boundary, whereas the pixels outside the outer boundary are transparent. In this situation it is possible to gradually change the transparency value of pixels at the outer boundary over a predefined number of pixels from a value of no transparency inside the outer boundary to a value of full transparency outside the outer boundary. This embodiment makes the transition from full aerial view inside the urban agglomeration to no aerial view outside the urban agglomeration less abrupt.

When the pixels outside an urban agglomeration of an aerial image are set to full transparency, it is possible to superimpose two different aerial images showing two different urban agglomerations in the same tile. When the geographical area covered by one tile contains two different urban agglomerations, the database can contain a first aerial image of said one tile showing the aerial view being limited to one of the two urban agglomerations. In the first aerial image shown no aerial view of the geographical area outside the outer boundary of said one urban agglomeration is provided. The database can then contain a second aerial image for the same tile showing the aerial view that is limited to the other of the two urban agglomerations, the second aerial image showing no aerial view of the geographical area outside the outer boundary of said other urban agglomeration. For displaying a display image the image viewer can generate the display image by superpositioning the two different aerial images of said geographical region and by displaying them at the same time.

The database may further contain, for each of the urban agglomerations for which an aerial image exists, metadata. The metadata contain information that allows to handle and display the aerial image or aerial images of each urban agglomeration separately. By way of example the metadata contain the geographical latitude and longitude of the urban agglomeration. The metadata can contain the latitude and longitude information of the bonding boxes, i.e. of the outer boundary of the urban agglomeration. Additionally, the aerial images for an urban agglomeration may exist at different scale levels. The metadata can then contain additional information to which scale level the aerial image of the urban agglomeration is visible. The metadata furthermore may contain the information which tile or which tiles contain at least part of the aerial image of the urban agglomeration. When the image viewing system receives a request for displaying a certain urban agglomeration, the metadata help to identify the aerial images that are needed to generate the aerial view of the desired urban agglomeration.

The database can furthermore contain map data of the geographical region for which the aerial images exist. The image viewer can then be configured in such a way that information provided by the map data is displayed in the area of the tile outside the outer boundary of the urban agglomeration. By way of example the map data can contain information such as landuse polygons indicating whether the area outside the urban agglomeration is a river, a forest, etc. The polygons delimit the different areas having a different landuse.

The invention furthermore relates to an image generating unit generating the aerial images. The image generating unit comprises a database containing complete aerial images of the geographical region, a complete aerial image covering a geographical area of a tile showing an aerial view of the complete geographical region covered by a tile. The database furthermore contains map data including information about an outer boundary of an urban agglomeration located in a tile. The image generating unit furthermore contains an image processing unit configured to process the complete aerial images and configured to generate a transparency mask for the complete aerial images. The image processing unit is configured to determine a geographical area covered by the urban agglomeration located inside the outer boundary and to generate the transparency mask delimiting an area located inside the outer boundary for the area outside the outer boundary. The image processing unit can then apply the transparency mask to the complete aerial image in such a way that an aerial view of the urban agglomeration shown in the aerial image is limited to the urban agglomeration and that no aerial view is shown of the geographical area outside the outer boundary. This image generating unit is able to generate the aerial images displayed by the image viewing system discussed above. The image viewing system and the image generating system may be incorporated into a single unit so that the aerial images are generated from the complete aerial images just before they are displayed. However, it is also possible that the image generating unit generates the aerial images separately. These aerial images can be stored separately for each urban agglomeration and may be provided to the image viewing system as an independent data set.

The image generating unit may, when the complete aerial image shows two urban agglomerations, generate a first transparency mask for one of the two urban agglomerations and may apply the first transparency mask to the complete aerial image to generate the first aerial image of the tile showing the aerial view that is limited to said one of the two urban agglomerations, wherein in the area outside said one urban agglomeration the first aerial image has a transparency value set to full transparency. The image processing unit may furthermore generate a second transparency mask for the other of the two urban agglomerations and may apply the second transparency mask to the complete aerial image to generate the second aerial image of said tile showing the aerial view being limited to the other of the two urban agglomerations, wherein the area outside said other urban agglomeration in the second aerial image has a transparency value set to full transparency. The generation of aerial images separately for each urban agglomeration may be advantageous when aerial images may be superpositioned or when data sets are generated separately for each urban agglomeration.

The image generating unit may furthermore contain a control unit configured to determine the aerial images that show an aerial view of one urban agglomeration. The control unit may then be configured to store the aerial images of said one urban agglomeration in the single data set. By storing the aerial images of one urban agglomeration in a single data set, the data sets for different urban agglomerations can be handled separately and can be supplied separately to different end users or other entities, such as map data suppliers.

The invention furthermore relates to a method for generating the aerial images, the method comprising the step of providing complete aerial images of a geographical region that is divided into tiles, wherein the complete aerial image covering a geographical area of a tile shows an aerial view of the complete geographical region covered by a single tile. In an additional step an outer boundary of an urban agglomeration located in a tile is determined and a transparency mask for the complete aerial images is generated in which an area inside the outer boundary of the urban agglomeration is delimited from the area outside the outer boundary. For generating the aerial image the transparency mask is applied to the complete aerial image in such a way that an aerial view of the urban agglomeration shown in the aerial image is limited to the urban agglomeration wherein no aerial view is shown of the geographical area outside the outer boundary.

### Brief Description of the Drawings

The invention will be described in further detail below with reference to the accompanying drawings, in which
Fig. 1 is a schematic view of an image viewing system allowing to display aerial images,
Fig. 2 is a schematic view showing how a geographical region is separated into tiles, an aerial image covering a single tile,
Fig. 3 is a schematic view of a tile in which an urban agglomeration is located,
Fig. 4 is a schematic view of an urban agglomeration being located in four different tiles,
Fig. 5 is a schematic view of a tile having three different urban agglomerations,
Fig. 6 is a flowchart indicating the steps for displaying aerial images,
Fig. 7 is a flowchart containing the steps for generating the aerial images, and
Fig. 8 is a schematic view of an image generating unit generating the aerial images from complete aerial view images.

### Detailed Description

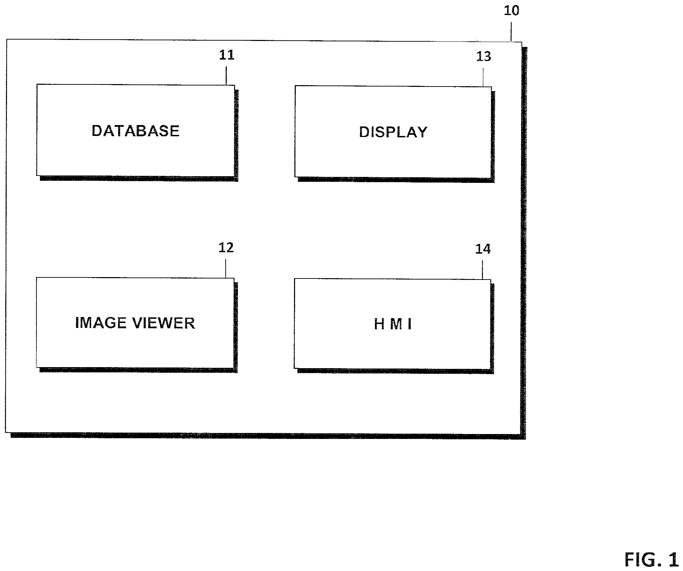

In Fig. 1 an image viewing system 10 is shown with which aerial images can be displayed to a user. The image viewing system may be part of a standalone computing unit, a navigation system or any other system with which aerial images should be displayed. The image viewing system 10 comprises a database 11 with aerial images of a geographical region, be it a country, part of a country, a continent or any other geographical area. The image viewing system comprises an image viewer 12 that generates a display image of the aerial view that can be displayed on a display 13. Additionally, a human-machine-interface 14 is provided with which the operating of the image viewing system 10 can be controlled by a user. The user may select a certain geographical region for which aerial images should be displayed using human-machine-interface 14.

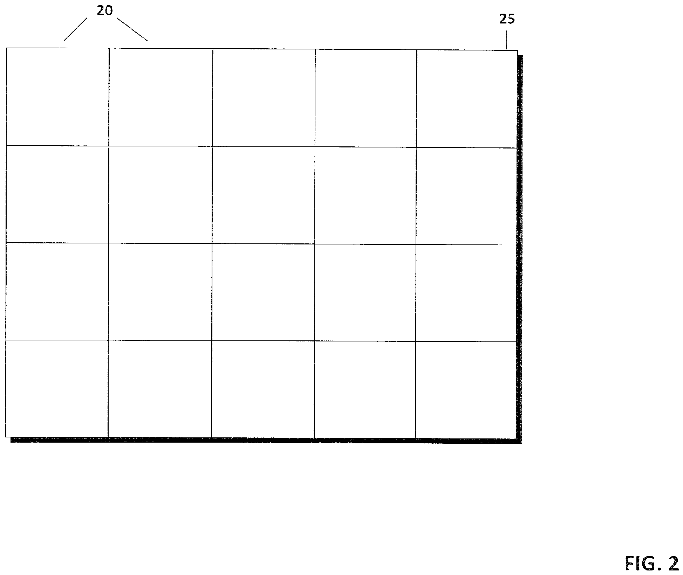

In Fig. 2 a geographical area is shown for which several aerial images 20 exist, each aerial image covering a certain geographical region so that a tile pattern being a plurality of tiles 25 is generated as shown in Fig. 2.

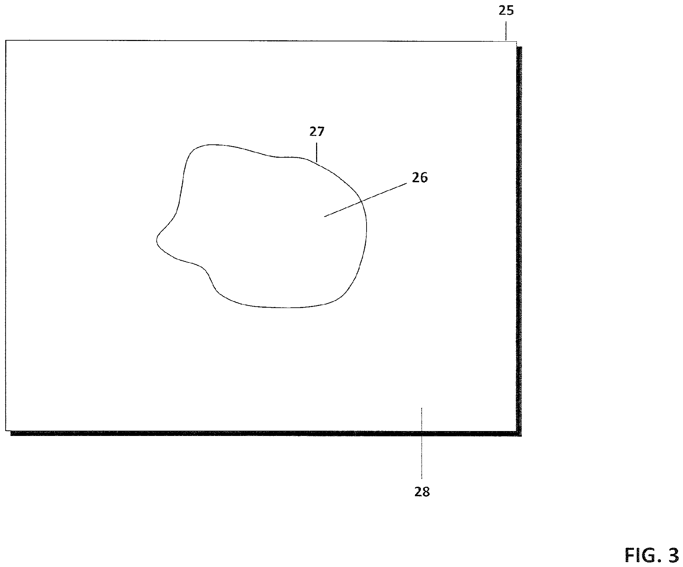

In Fig. 3 single tile 25 is shown. The aerial image of this tile indicates an urban agglomeration 26 located in the tile 25. The aerial image covering tile 25 is now configured such that the aerial view is limited to the urban agglomeration 26. This means that the aerial view is limited to the area inside an outer boundary 27 of urban agglomeration 26. The aerial image is now configured such that the area 28 outside the outer boundary does not show an aerial view of the geographical area outside the urban agglomeration 26.

The aerial images 20 for each tile 25 have a data format that provides, for each pixel of the image, in addition to a grey value in the case of a black-white picture or a color value in the case of a color picture, a transparency value or alpha channel. In a color picture color values for red, green, and blue may be provided, the RGB values. In addition to these RGB values an alpha value may be provided as a fourth value, the alpha value indicating the transparency of a pixel. The transparency value can be a value between 0 and 1 or can be a value between 0 and 255 if an 8-bit value is used. One the two end values can indicate a full transparency meaning that the pixel does not have any coverage information, the other end value indicating that the pixel has no transparency at all.

Applied to the present invention the pixels located inside the outer boundaries of an urban agglomeration may have set their transparency value to no transparency, whereas the pixels outside the outer boundary 27 may be set to full transparency. In area 28 the image viewer 12 may display map data of the geographical region shown in the aerial image. In area 28 the landuse polygons indicating the use of the land outside the urban agglomeration may be shown.

The map data shown in area 28 may also be stored in database 11 or may be stored in a separate database not shown in Fig. 1. The aerial images in database 11 are stored independently from the map data that may be present in the image viewing system 10 shown in Fig. 1. The aerial images can be displayed independently from the map data. The database 11 may be fixedly incorporated into the image viewing system 10. However, the database 11 may also be a removable database, e.g. a USB stick containing the aerial images to be displayed.

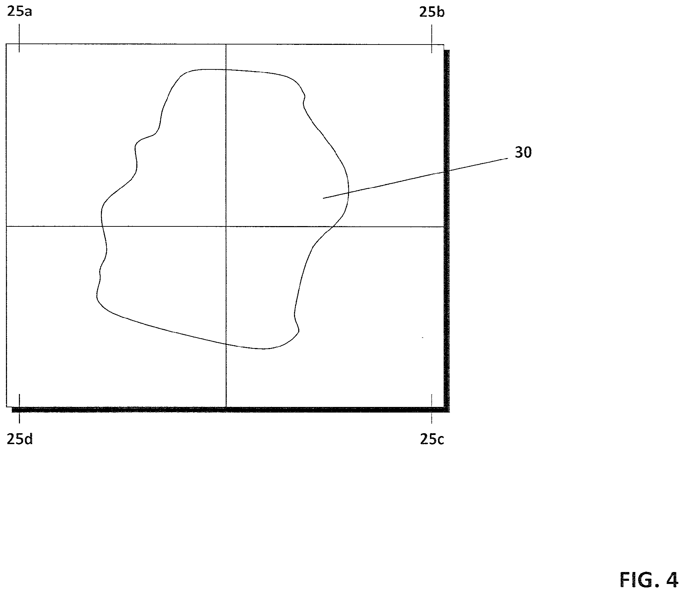

The database 11 can contain different data sets, each data set containing the aerial images of one urban agglomeration. This makes it possible to independently use the aerial images of the different urban agglomerations. It is possible to separately provide a data set for an urban agglomeration from a data set from another urban agglomeration. Additionally, for each data set metadata exist which contain information allowing to address a data set of a single urban agglomeration. By way of example the metadata contain the number of tiles necessary for displaying an aerial view of an urban agglomeration as, as shown in Fig. 4, an urban agglomeration 30 may be located such that different tiles 25a-25d cover a geographical region in which part of the urban agglomeration 30 is provided. The aerial image of each tile 25a-25d only shows an aerial view inside the outer boundary of the urban agglomeration located in the corresponding tile. Outside the urban agglomeration 30 the pixels in the different tiles have a transparency value set to full transpareny as explained in connection with Fig. 3.

Referring back to the metadata, the metadata for a data set of a single urban agglomeration contain the numbers of the tiles needed to show an urban agglomeration. Additionally, the metadata contain the longitude and latitude of the outer boundary of the urban agglomeration. Additionally, it is possible that the aerial images exist for different levels of map scale. The metadata then additionally contain the information to which scale level the aerial image can be used.

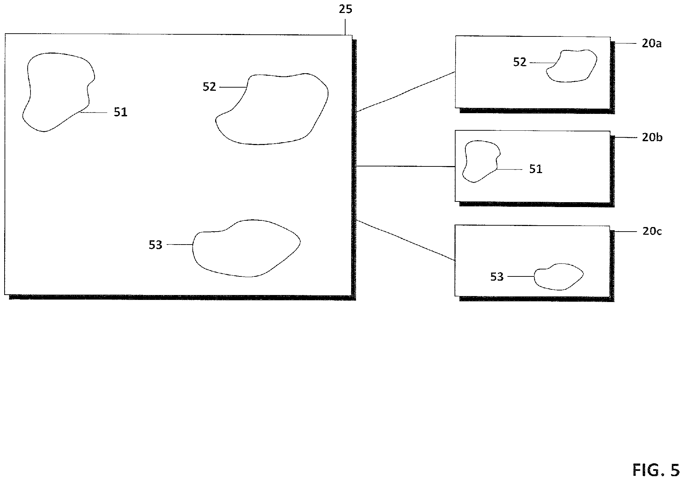

In connection with Fig. 5 an embodiment is shown in which three urban agglomerations 51, 52 and 53 are located in a geographical area covered by one tile 25. In one embodiment of the invention it is possible that an aerial image is provided in which an aerial view of the three urban agglomerations is shown in a single aerial image meaning that in this image the aerial view would be limited to the inside of urban agglomeration 51, to the inside of urban agglomeration 52 and to the inside of urban agglomeration 53, no aerial view being shown for the area outside the three urban agglomerations 51-53.

In another embodiment an aerial image of urban agglomeration 51 may be provided by a first supplier of aerial images. The aerial image of urban agglomeration 52 may be provided at a later stage from the same image supplying company or from another image supplying company. According to one embodiment an aerial image 20a is provided showing only the aerial view of urban agglomeration 52 with the transparency value outside the urban agglomeration 52 being set to full transparency. In the same way in the aerial view image 20b only an aerial view inside urban agglomeration 51 is shown, and in aerial image 20c only the aerial view inside urban agglomeration 53 is shown. In both images 20b and 20c the areas outside the corresponding urban agglomerations are set to full transparency.

With such an embodiment it is possible to independently handle each of the aerial images 20a-20c. By way of example it is possible to add to the database 11 image 20b later on when the aerial view of urban agglomeration 51 has been provided. When an aerial view of tile 25 should be generated, it is possible to superposition the different images 20a-20c to provide an aerial image showing an aerial view limited to the three urban agglomerations 51-53.

The generation of aerial images for an urban agglomeration with the transparency being set to full transparency outside the urban agglomeration allows to add an aerial image for the same tile at a later stage.

Outside the three urban agglomerations 51-53 information retrieved from a map database may be displayed.

The map data displayed in connection with the aerial view may also be stored in tiles. The tile size of the map data needs not necessarily correspond to the tile size of the aerial images. However, it is possible that both tiles have the same size.

The tiles 25 of the aerial images each have an index allowing to identify the tile and the corresponding geographical area covered by a tile. This index may be used by the image viewer 12 to identify the tile or tiles needed for displaying an aerial image. By way of example when the image viewing system 10 of Fig. 1 has to display a certain geographical area, the section of the geographical area to be displayed is determined and the indices needed to display aerial images of the desired geographical area are determined and fed to the database 11 from where the aerial images having the corresponding indices are retrieved for display on display 13.

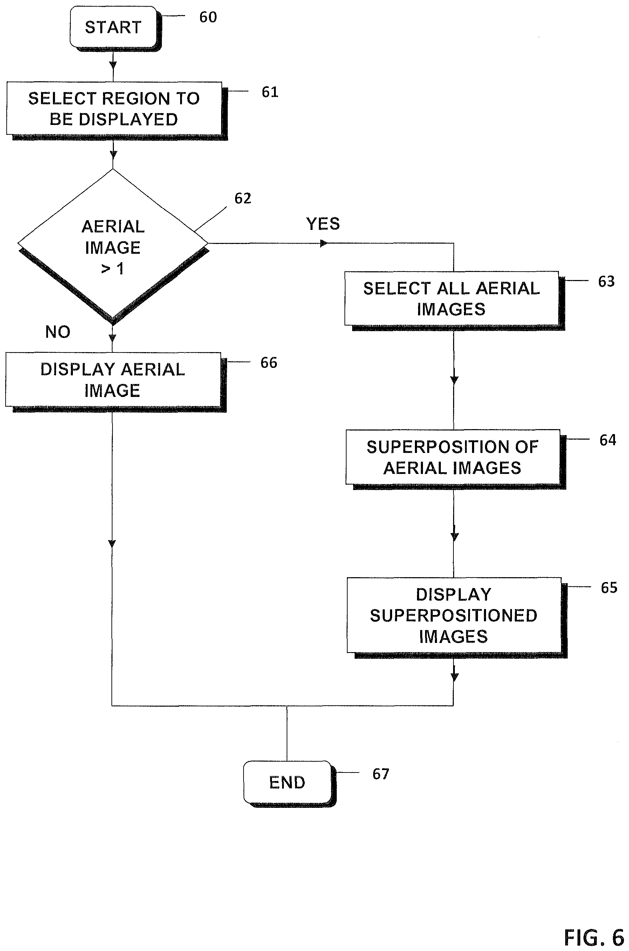

In connection with Fig. 6 a flowchart is shown showing the steps how aerial images are displayed on the display 13. The method starts in step 60. In step 61 it is determined for which geographical region the aerial image should be displayed. When the geographical area is known, the database 11 is accessed and it is checked how many aerial images for the needed tile exist. In the example shown in Fig. 6 only one tile is displayed. If it is determined in step 62 that more than one aerial image exists for the tile as explained above in connection with Fig. 5 the different aerial images stored for this tile are selected in step 63. The different aerial images are superpositioned in step 64 and displayed in a superpositioned form in step 65.

If only one aerial image exists for the selected tile in step 62 the corresponding aerial image is displayed in step 66.

As explained above in connection with Fig. 4, the situation may exist that an urban agglomeration is located in different tiles. In this example step 62 and the following steps would be carried out for each of the tiles 25a-25c.

The method ends in step 67.

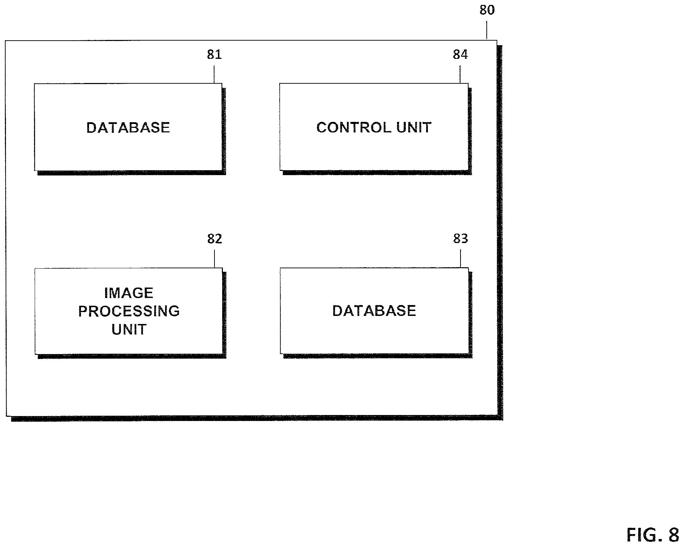

In Fig. 8 an image generating unit 80 is shown with which the aerial images explained above in connection with Figs. 1-6 can be generated. The image generating unit comprises a first database 81 containing complete aerial images, a complete aerial image showing an aerial view of a complete geographical region covered by a tile 25. Thus, in the database 81 the aerial views cover a complete tile. Furthermore, an image processing unit 82 is provided which processes the complete aerial images in such a way that the aerial images as explained in connection with Figs. 3-5 can be generated. The image processing unit limits the aerial view to the area inside the urban agglomeration, the newly generated aerial images being stored in the second database 83. The aerial images stored in database 83 correspond to the aerial images stored in database 11 shown in Fig. 1.

The image processing unit 82 generates the aerial images from the complete aerial images by using a transparency mask in which the area inside an urban agglomeration is defined. By way of example the mask may be configured such that the mask has a value of 1 for all pixels inside the urban agglomeration and a value of 0 for all pixels outside the urban agglomeration. The value of "1" means that the color value of the pixels is used for displaying, whereas a value of "0" means that the color value is not taken at all. When this mask is applied to the complete aerial images, an aerial view is generated inside the urban agglomeration and no aerial view is generated outside the urban agglomeration. When different urban agglomerations are located in a tile, three different masks may be generated, one for each urban agglomeration.

A control unit 84 controls the preparation of the aerial images. The control unit 84 may furthermore store the aerial images in the database 83 in such a way that a data set is stored for each urban agglomeration, the data set containing all the aerial images for one urban agglomeration. The control unit 84 furthermore generates the metadata, each data set allowing to address the aerial images of a single urban agglomeration in an effective way.

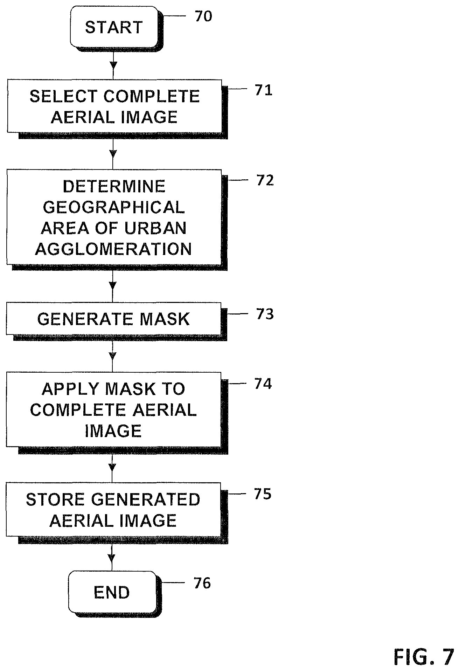

In connection with Fig. 7 the steps for generating the aerial images from the complete aerial images are summarized.

The method starts in step 70 and in step 71 the complete aerial image is selected, e.g. from database 81. In step 72 the geographical area of the urban agglomeration for which the aerial images should be generated are determined. In this step 72 the outer boundary of the urban agglomeration is determined and the latitude and longitude coordinates of the outer boundary are determined. When the coordinates of the outer boundary of the urban agglomeration are known, a mask can be generated in step 73, the mask helping to cut out the aerial view of the urban agglomeration from the complete aerial image. In step 74 the mask is applied to the complete aerial image. As a result, an aerial image is generated that shows an aerial view inside the urban agglomeration and does not show the aerial view outside the urban agglomeration. In an additional step 75 the generated aerial image is stored, e.g. in database 83. In an additional step not shown the metadata for a data set of an urban agglomeration are generated and additionally stored in the database 83. The method ends in step 76.

The urban agglomeration mentioned in the above disclosure can be of any size. The urban agglomeration may even be a smaller village. Additionally, it is possible that the urban agglomeration corresponds to a single point of interest. In this example an aerial view only of a certain point of interest, e.g. a famous building located in the countryside, is generated, the area outside the point of interest being not shown by the aerial image.

## Claims

1. An image viewing system (10) comprising
- a database (11), the database containing a plurality of aerial images (20) of a geographical region that is divided into tiles (25), an aerial image (20) covering an geographical area of a tile (20), wherein when the aerial image shows an urban agglomeration (26) that is delimited from a surrounding geographical area by an outer boundary (27), the aerial image is configured such that an aerial view of the urban agglomeration (26) shown in the aerial image is limited to the urban agglomeration, wherein no aerial view is shown of the geographical area outside the outer boundary (27), wherein the geographical area covered by one tile contains two different urban agglomerations (51, 52), the database containing a first aerial image (20a) of said one tile showing the aerial view being limited to one of the two urban agglomerations (52), the first aerial image (20a) showing no aerial view of the geographical area outside the outer boundary of said one urban agglomeration (52), the database containing a second aerial image (20b) of said one tile showing the aerial view being limited to the other of the two urban agglomerations (51), the second aerial image showing no aerial view of the geographical area outside the outer boundary of said other urban agglomeration (51), wherein the aerial image (20) is a digital aerial image in which the pixels of the aerial image each contain at least one colour value and a transparency value varying from a value corresponding to full transparency to a value corresponding to no transparency, wherein the aerial image (20) is configured such that the transparency value of pixels outside the urban agglomeration is set to full transparency, and the transparency value of pixels inside the urban agglomeration is set to no transparency,
- an image viewer (12) generating a display image of the aerial image, wherein, when the image viewer determines that a display image is to be generated for a geographical region for which two different aerial images exist, the image viewer generates the display image comprising two different urban agglomerations by superpositioning the two different aerial images (51, 52) of said geographical region from the database (11), and by displaying them at the same time.

2. The image viewing system (10) according to claim 1, wherein the aerial image (20) is configured such the transparency value of pixels at the outer boundary of the urban agglomeration (26) gradually changes over a predefined number of pixels from a value of no transparency inside the outer boundary to a value of full transparency outside the outer boundary.

3. The image viewing system (10) according to any one of the preceding claims, wherein the database (11) contains, for each urban agglomeration for which an aerial image exits, meta data, the meta data containing at least one of the following pieces of information:
which tile or tiles contain at least part of the aerial image of the urban agglomeration, a geographical latitude and longitude of the urban agglomeration, to which scale level the aerial image of an urban agglomeration is visible.

4. The image viewing system (10) according to any one of the preceding claims, wherein the database furthermore contains map data of the geographical region for which the aerial images exist, wherein the image viewer is configured to display information provided by the map data in the area of the tile outside the outer boundary of the urban agglomeration.

5. An image generating unit (80) generating aerial images of a geographical region that is divided into tiles, an aerial image covering a geographical area of a tile, the image generating unit comprising
- a database (81) containing complete aerial images of the geographical region, a complete aerial image covering an geographical area of a tile showing an aerial view of the complete geographical region covered by a tile, the data base further containing map data including information of an outer boundary of an urban agglomeration located in a tile,
- an image processing unit (82) configured to process the complete aerial images and configured to generate a transparency mask for the complete aerial images, the image processing unit (82) being configured to determine a geographical area covered by the urban agglomeration (26) located inside the outer boundary (27) and to generate the transparency mask delimiting the area located inside the outer boundary from the area outside the outer boundary, the image processing unit (82) applying the transparency mask to the complete aerial image in such a way that an aerial view of the urban agglomeration shown of the geographical area in the aerial image is limited to the urban agglomeration and no aerial view is shown outside the outer boundary, wherein the aerial image (20) is a digital aerial image in which the pixels of the aerial image each contain at least one colour value and a transparency value varying from a value corresponding to full transparency to a value corresponding to no transparency, wherein, when the complete aerial image shows two urban agglomerations (51, 52) in a tile, the image processing unit (82) generates a first transparency mask for one of the two urban agglomerations (51) and applies the first transparency mask to the complete aerial image to generate a first aerial image (20a) of said tile showing the aerial view being limited to one of the two urban agglomerations (51), the area outside said one urban agglomeration (51) in the first aerial image (20a) having a transparency value set to full transparency and the transparency value of pixels inside said one of the two urban agglomerations having a transparency value of no transparency, wherein the image processing unit (82) generates a second transparency mask for the other of the two urban agglomerations (52) and applies the second transparency mask to the complete aerial image to generate a second aerial image (20b) of said tile showing the aerial view being limited to the other of the two urban agglomerations (52), the area outside said other of the two urban agglomerations in the second aerial image being set to full transparency and the area inside said other of the two urban agglomerations in the second aerial image being set to no transparency.

6. The image generating unit (80) according to claim 5, further comprising a control unit configured to determine the aerial images that show an aerial view of one urban agglomeration and configured to store the aerial images of said one urban agglomeration in a single data set.

## Patentansprüche

1. Bildansichtssystem (10) umfassend
- eine Datenbank (11), wobei die Datenbank eine Vielzahl von Luftbildern (20) einer geographischen Region, die in Kacheln (25) unterteilt ist, beinhaltet, wobei ein Luftbild (20) einen geographischen Bereich einer Kachel (20) abdeckt, wobei, wenn das Luftbild ein städtisches Ballungsgebiet (26) zeigt, das von einem umliegenden geographischen Bereich durch eine äußere Abgrenzung (27) abgegrenzt ist, das Luftbild derart konfiguriert ist, dass eine Luftansicht des städtischen Ballungsgebiets (26), das im Luftbild gezeigt ist, auf das städtische Ballungsgebiet begrenzt ist, wobei keine Luftansicht des geographischen Bereichs außerhalb der äußeren Abgrenzung (27) gezeigt ist, wobei der von einer Kachel abgedeckte geographische Bereich zwei verschiedene städtische Ballungsgebiete (51, 52) beinhaltet, wobei die Datenbank ein erstes Luftbild (20a) der einen Kachel beinhaltet, die die Luftansicht, die auf eines der beiden städtischen Ballungsgebiete (52) begrenzt ist, zeigt, wobei das erste Luftbild (20a) keine Luftansicht des geographischen Bereichs außerhalb der äußeren Begrenzung des einen städtischen Ballungsgebiets (52) zeigt, wobei die Datenbank ein zweites Luftbild (20b) der einen Kachel beinhaltet, die die Luftansicht, die auf das andere der beiden städtischen Ballungsgebiete (51) begrenzt ist, zeigt, wobei das zweite Luftbild keine Luftansicht des geographischen Bereichs außerhalb der äußeren Begrenzung des anderen städtischen Ballungsgebiets (51) zeigt, wobei das Luftbild (20) ein digitales Luftbild ist, in dem die Pixel des Luftbilds jeweils zumindest einen Farbwert und einen Transparenzwert beinhalten, die von einem Wert, der einer vollen Transparenz entspricht, zu einem Wert, der keiner Transparenz entspricht, variieren, wobei das Luftbild (20) derart konfiguriert ist, dass der Transparenzwert von Pixeln außerhalb des städtischen Ballungsgebiets auf volle Transparenz eingestellt ist, und der Transparenzwert von Pixeln innerhalb des städtischen Ballungsgebiet auf keine Transparenz eingestellt ist,
- einen Bildbetrachter (12), der ein Anzeigebild des Luftbilds erzeugt, wobei, wenn der Bildbetrachter bestimmt, dass ein Anzeigebild für einen geographischen Bereich erzeugt werden soll, für den zwei verschiedene Luftbilder existieren, der Bildbetrachter das Anzeigebild, das zwei verschiedene städtische Ballungsgebiete beinhaltet erzeugt, indem er die beiden verschiedenen Luftbilder (51, 52) der geographischen Region aus der Datenbank (11) überlagert und diese gleichzeitig anzeigt.

2. Bildansichtssystem (10) nach Anspruch 1, wobei das Luftbild (20) derart konfiguriert ist, dass sich der Transparenzwert von Pixeln an der äußeren Abgrenzung des städtischen Ballungsgebiets (26) über eine vordefinierte Anzahl von Pixeln von einem Wert keiner Transparenz innerhalb der äußeren Begrenzung zu einem Wert voller Transparenz außerhalb der äußeren Begrenzung schrittweise ändert.

3. Bildansichtssystem (10) nach einem der vorhergehenden Ansprüche, wobei die Datenbank (11) für jedes städtische Ballungsgebiet, für das ein Luftbild existiert, Metadaten beinhaltet, wobei die Metadaten zumindest eines der folgenden Informationsstücke beinhaltet:
welche Kachel oder Kacheln zumindest einen Teil des Luftbilds des städtischen Ballungsgebiets beinhalten, einen geographische Breiten- und Längengrad des städtischen Ballungsgebiets, auf welcher Skalierungsebene das Luftbild eines städtischen Ballungsgebiets sichtbar ist.

4. Bildansichtssystem (10) nach einem der vorhergehenden Ansprüche, wobei die Datenbank weiterhin Kartendaten der geographischen Region, für die das Luftbild existiert beinhaltet, wobei der Bildbetrachter dazu konfiguriert ist, von den Kartendaten bereitgestellte Informationen im Bereich der Kachel außerhalb der äußeren Begrenzung des städtischen Ballungsgebiets anzuzeigen.

5. Bilderzeugende Einheit (80), die Luftbilder einer geographischen Region, die in Kacheln unterteilt ist, erzeugt, wobei ein Luftbild einen geographischen Bereich einer Kachel abdeckt, wobei die bilderzeugende Einheit Folgendes umfasst:
- eine Datenbank (81), die vollständige Luftbilder der geographischen Region beinhaltet, wobei ein vollständiges Luftbild einen geographischen Bereich einer Kachel, die eine Luftansicht der vollständigen geographischen Region, die von einer Kachel abgedeckt ist, zeigt, wobei die Datenbank weiterhin Kartendaten einschließlich Informationen zu einer äußeren Begrenzung eines städtischen Ballungsgebiets, das sich in einer Kachel befindet, beinhaltet,
- eine bildverarbeitende Einheit (82) die dazu konfiguriert ist, die vollständigen Luftbilder zu verarbeiten und dazu konfiguriert ist, eine Transparenzmaske für die vollständigen Luftbilder zu erzeugen, wobei die bildverarbeitende Einheit (82) dazu konfiguriert ist, einen geographischen Bereich, der von dem städtischen Ballungsgebiet (26), das sich innerhalb der äußeren Begrenzung (27) befindet, abgedeckt ist, zu bestimmen und die Transparenzmaske, die den Bereich, der sich innerhalb der äußeren Abgrenzung befindet von dem Bereich außerhalb der äußeren Begrenzung abgrenzt, wobei die bildverarbeitende Einheit (82) die Transparenzmaske auf das vollständige Luftbild derart anwendet, dass eine Luftansicht des städtischen Ballungsgebiets, das von dem geographischen Bereich in dem Luftbild gezeigt ist, auf das städtische Ballungsgebiet begrenzt ist und keine Luftansicht außerhalb der äußeren Begrenzung gezeigt ist, wobei das Luftbild (20) ein digitales Luftbild ist, in dem die Pixel des Luftbilds jeweils zumindest einen Farbwert und einen Transparenzwert beinhalten, die von einem Wert, der einer vollen Transparenz entspricht, zu einem Wert, der keiner Transparenz entspricht, variieren, wobei, wenn das vollständige Luftbild zwei städtische Ballungsgebiete (51, 52) in einer Kachel zeigt, die bildverarbeitende Einheit (82) eine erste Transparenzmaske für eines der beiden städtischen Ballungsgebiete (51) erzeugt und die erste Transparenzmaske auf das vollständige Luftbild anwendet, um ein erstes Luftbild (20a) der Kachel, die das Luftbild, das auf eines der beiden städtischen Ballungsgebiete (51) begrenzt ist, zeigt, zu erzeugen, wobei der Bereich außerhalb des einen städtischen Ballungsgebiets (51) in dem ersten Luftbild (20a) einen Transparenzwert aufweist, der auf volle Transparenz eingestellt ist, und der Transparenzwert von Pixeln innerhalb des einen der beiden städtischen Ballungsgebiete einen Transparenzwert von keiner Transparenz aufweist, wobei die bildverarbeitende Einheit (82) eine zweite Transparenzmaske für das andere der beiden städtischen Ballungsgebiete (52) erzeugt und die zweite Transparenzmaske auf das vollständige Luftbild anwendet, um ein zweites Luftbild (20b) der Kachel, die das Luftbild, das auf das andere der beiden städtischen Ballungsgebiete (52) begrenzt ist, zeigt, zu erzeugen, wobei der Bereich außerhalb des anderen der beiden städtischen Ballungsgebiete in dem zweiten Luftbild auf volle Transparenz eingestellt ist, und der Bereich innerhalb des anderen der beiden städtischen Ballungsgebiete in dem zweiten Luftbild auf keine Transparenz eingestellt ist.

6. Bilderzeugende Einheit (80) nach Anspruch 5, weiterhin umfassend eine Steuereinheit, die dazu konfiguriert ist, die Luftbilder, die eine Luftansicht des städtischen Ballungsgebiets zeigen, zu bestimmen und dazu konfiguriert ist, die Luftbilder des städtischen Ballungsgebiets in einem einzigen Datensatz zu speichern.

## Revendications

1. Système d'affichage d'images (10) comprenant :
- une base de données (11), la base de données contenant une pluralité d'images aériennes (20) d'une région géographique qui est divisée en vignettes (25), une image aérienne (20) couvrant une zone géographique d'une vignette (20), dans lequel, lorsque l'image aérienne montre une agglomération urbaine (26) qui est délimitée d'une zone géographique alentour par une frontière extérieure (27), l'image aérienne est configurée de sorte qu'une vue aérienne de l'agglomération urbaine (26) montrée dans l'image aérienne est limitée à l'agglomération urbaine, dans lequel aucune vue aérienne n'est montrée de la zone géographique en dehors de la frontière extérieure (27), dans lequel la zone géographique couverte par une vignette contient deux agglomérations urbaines différentes (51, 52), la base de données contenant une première image aérienne (20a) de ladite une vignette montrant la vue aérienne étant limitée à une des deux agglomérations urbaines (52), la première image aérienne (20a) ne montrant aucune vue aérienne de la zone géographique en dehors de la frontière extérieure de ladite une agglomération urbaine (52), la base de données contenant une seconde image aérienne (20b) de ladite une vignette montrant la vue aérienne étant limitée à l'autre des deux agglomérations urbaines (51), la seconde image aérienne ne montrant aucune vue aérienne de la zone géographique en dehors de la frontière extérieure de ladite autre agglomération urbaine (51), dans lequel l'image aérienne (20) est une image aérienne numérique dans laquelle les pixels de l'image aérienne contiennent chacun au moins une valeur de couleur et une valeur de transparence variant entre une valeur correspondant à une transparence totale et une valeur correspondant à aucune transparence, dans lequel l'image aérienne (20) est configurée de telle sorte que la valeur de transparence de pixels en dehors de l'agglomération urbaine est définie sur une transparence totale, et la valeur de transparence de pixels à l'intérieur de l'agglomération urbaine est définie sur aucune transparence,
- un afficheur d'image (12) générant une image d'affichage de l'image aérienne, dans lequel, lorsque l'afficheur d'image détermine qu'une image d'affichage doit être générée pour une région géographique pour laquelle deux images aériennes différentes existent, l'afficheur d'image génère l'image d'affichage comprenant deux agglomérations urbaines différentes en superposant les deux images aériennes différentes (51, 52) de ladite région géographique de la base de données (11), et en les affichant en même temps.

2. Système d'affichage d'images (10) selon la revendication 1, dans lequel l'image aérienne (20) est configurée de telle sorte que la valeur de transparence de pixels à la frontière extérieure de l'agglomération urbaine (26) change progressivement sur un nombre prédéfini de pixels entre une valeur d'aucune transparence à l'intérieur de la frontière extérieure et une valeur de transparence totale en dehors de la frontière extérieure.

3. Système d'affichage d'images (10) selon l'une quelconque des revendications précédentes, dans lequel la base de données (11) contient, pour chaque agglomération urbaine pour laquelle une image aérienne existe, des métadonnées, les métadonnées contenant au moins un des éléments d'informations suivants : quelle(s) vignette ou vignettes contiennent au moins une partie de l'image aérienne de l'agglomération urbaine, une latitude et longitude géographiques de l'agglomération urbaine, à quel niveau d'échelle l'image aérienne d'une agglomération urbaine est visible.

4. Système d'affichage d'images (10) selon l'une quelconque des revendications précédentes, dans lequel la base de données contient en outre des données de carte de la région géographique pour laquelle les images aériennes existent, dans lequel l'afficheur d'image est configuré pour afficher des informations fournies par les données de carte dans la zone de la vignette en dehors de la frontière extérieure de l'agglomération urbaine.

5. Unité de génération d'image (80) générant des images aériennes d'une région géographique qui est divisée en vignettes, une image aérienne couvrant une zone géographique d'une vignette, l'unité de génération d'image comprenant
- une base de données (81) contenant des images aériennes complètes de la région géographique, une image aérienne complète couvrant une zone géographique d'une vignette montrant une vue aérienne de la région géographique complète couverte par une vignette, la base de données contenant en outre des données de carte incluant des informations d'une frontière extérieure d'une agglomération urbaine située dans une vignette,
- une unité de traitement d'image (82) configurée pour traiter les images aériennes complètes et configurée pour générer un masque de transparence pour les images aériennes complètes, l'unité de traitement d'image (82) étant configuré pour déterminer une zone géographique couverte par l'agglomération urbaine (26) située à l'intérieur de la frontière extérieure (27) et pour générer le masque de transparence délimitant la zone située à l'intérieur de la frontière extérieure de la zone en dehors de la frontière extérieure, l'unité de traitement d'image (82) appliquant le masque de transparence à l'image aérienne complète d'une manière telle qu'une vue aérienne de l'agglomération urbaine montrée de la zone géographique dans l'image aérienne est limitée à l'agglomération urbaine et aucune vue aérienne n'est montrée en dehors de la frontière extérieure, dans laquelle l'image aérienne (20) est une image aérienne numérique dans laquelle les pixels de l'image aérienne contiennent chacun au moins une valeur de couleur et une valeur de transparence variant entre une valeur correspondant à une transparence totale et une valeur correspondant à aucune transparence, dans laquelle, lorsque l'image aérienne complète montre deux agglomérations urbaines (51, 52) dans une vignette, l'unité de traitement d'image (82) génère un premier masque de transparence pour une des deux agglomérations urbaines (51) et applique le premier masque de transparence à l'image aérienne complète pour générer une première image aérienne (20a) de ladite vignette montrant la vue aérienne étant limitée à une des deux agglomérations urbaines (51), la zone en dehors de ladite une agglomération urbaine (51) dans la première image aérienne (20a) ayant une valeur de transparence définie sur une transparence totale et la valeur de transparence de pixels à l'intérieur de ladite une des deux agglomérations urbaines ayant une valeur de transparence d'aucune transparence, dans laquelle l'unité de traitement d'image (82) génère un second masque de transparence pour l'autre des deux agglomérations urbaines (52) et applique le second masque de transparence à l'image aérienne complète pour générer une seconde image aérienne (20b) de ladite vignette montrant l'image aérienne étant limitée à l'autre des deux agglomérations urbaines (52), la zone en dehors de ladite autre des deux agglomérations urbaines dans la seconde image aérienne étant définie sur une transparence totale et la zone à l'intérieur de ladite autre des deux agglomérations urbaines dans la seconde image aérienne étant définie sur aucune transparence.

6. Unité de génération d'image (80) selon la revendication 5, comprenant en outre une unité de commande configurée pour déterminer les images aériennes qui montrent une vue aérienne d'une agglomération urbaine et configurée pour stocker les images aériennes de ladite une agglomération urbaine dans un seul jeu de données.
